# EUROPÄISCHE PATENTSCHRIFT

(11) **EP 0 919 763 B1**
(45) Veröffentlichungstag und Bekanntmachung des Hinweises auf die Patenterteilung: **08.12.2004**
(21) Anmeldenummer: 98120214.6
(22) Anmeldetag: 26.10.1998
(51) Int. Cl.: F16M 7/00, G01B 5/008

(54) **Justierelement für Koordinatenmessgeräte**
Adjusting device for coordinate measuring instrument
Elément de réglage pour appareil de mesures de coordonnées

(30) Priorität: 24.11.1997 DE 19751812
(43) Veröffentlichungstag der Anmeldung: 02.06.1999
(73) Patentinhaber: Carl Zeiss Industrielle Messtechnik GmbH, 73447 Oberkochen (DE)
(72) Erfinder: Matzkovits, Berthold, 89547 Gerstetten (DE); Gaus, Martin, 78727 Oberndorf (DE); Band, Gerhard, 78727 Oberndorf (DE)
(74) Vertreter: Henckell, Carsten

(56) Entgegenhaltungen:
- DE-A- 2 344 348
- DE-A- 2 414 630
- DE-A- 2 504 473
- DE-A- 4 115 014
- FR-A- 2 349 788
- GB-A- 1 597 339
- US-A- 2 940 784
- US-A- 4 631 834
- US-A- 5 511 760

## Beschreibung

Die Erfindung betrifft ein Justierelement zur Montage eines Bauteiles auf einem Fundament, umfassend eine Höhenverstellung die der Verstellung der Höhe des Bauteiles gegenüber dem Fundament dient sowie einen Anker, der der Verankerung des Justierelements im Fundament dient. Die Erfindung betrifft ferner ein Koordinatenmeßgerät, dessen Meßtisch mit einem erfindungsgemäßen Justierelement befestigt wurde sowie ein entsprechendes Verfahren zur Befestigung eines Bauteiles auf einem Fundament mit dem besagten Justierelement.

Derartige Justierelemente sind bereits aus dem Stand der Technik bekannt. So zeigt beispielsweise die deutsche Offenlegungsschrift 23 44 348 ein solches Justierelement. Das betreffende Justierelement umfaßt hierbei einen im Fundament eingebrachten Schwerlastdübel sowie eine als Auflage ausgebildete Höhenverstellung, die zwischen dem Fundament und dem zu befestigenden Bauteil angeordnet ist, sowie eine lange Schraube, die von der Gegenseite des zu befestigenden Bauteils durch Löcher im Bauteil und in der Höhenverstellung hindurch in den Schwerlastdübel eingeschraubt ist. Die als Auflage ausgebildete Höhenverstellung weist hierbei zwei über ein Gewinde miteinander verbundene Teile auf, wobei bei Verdrehung der beiden Teile gegeneinander die Gesamthöhe der Auflage verändert werden kann.

Ein anderes Justierelement ist in der deutschen Offenlegungsschrift 25 04 473 gezeigt. Das hierin gezeigte Justierelement weist ein Fußunterteil auf, das auf dem Fundament aufgestellt ist, und in dem drehbeweglich eine Spindel gelagert ist. In ihrem oberen Bereich weist die Spindel ein Gewinde auf, das mit einem am Maschinenfuß vorgesehenen Gewinde derart zusammenwirkt, daß bei Verdrehung der Spindel der Maschinenfuß gegenüber dem Fußunterteil angehoben wird.

In der deutschen Offenlegungsschrift 24 14 630 ist ebenfalls ein Justierelement der eingangs genannten Art gezeigt, bei dem ein Bauteil höhenverstellbar auf einem Justierelement gelagert ist. Das Justierelement weist hierbei zwei übereinander gelagerte, keilförmig ausgebildete Klötze auf, deren Lage durch eine entsprechende Schraube gegeneinander verstellt werden kann, so daß hierdurch ebenfalls die Höhe verändert wird.

Die Besonderheit der gezeigten Justierelemente ist hierbei darin zu sehen, daß das Justierelement Bauteile umfaßt, die vor der eigentlichen Montage des zu montierenden Bauteiles exakt auf dem Fundament angeordnet werden müssen. Bei den Justiervorrichtungen müssen hierbei zunächst lagegenau Löcher in das Fundament gebohrt werden und im Falle der deutschen Offenlegungsschriften 24 14 630 bzw. 23 44 348 die Höhenverstellungen auf dem Fundament eingerichtet werden bzw. im Falle der deutschen Offenlegungsschrift 25 04 473 das Fußunterteil auf dem Fundament montiert werden, bevor das eigentliche zu montierende Bauteil auf dem betreffenden Teilen der Justiervorrichtung gelagert werden kann. Die Montage der betreffenden Justierelemente ist in den drei genannten Offenlegungsschriften hierbei keinerlei Problem, da die zu bohrenden Löcher relativ leicht ausgemessen und lagegenau gebohrt werden können.

Ein erheblich größeres Problem ergibt sich jedoch, wenn die Justierelemente Anker aufweisen, die in einem entsprechenden Vergußmaterial, wie beispielsweise einen Spezialzement, eingegossen werden sollen, da die Lage der Anker bis zum Aushärten des Vergußmaterials lagestabil erhalten bleiben muß. Um dies zu erreichen, wurden an den zu befestigenden Bauteilen die Justierelemente bereits vor der Montage komplett befestigt, und das Bauteil so auf dem Fundament positioniert, daß die Anker in den speziell zur Aufnahme der Anker vorgesehenen Aussparungen im Fundament plaziert wurden und dann die besagten Aussparungen mit der entsprechenden Vergußmaterial aufgefüllt wurden. Dieses Montageverfahren erweist sich zwar als relativ einfach, wenn es sich bei den zu befestigenden Bauteilen um einfache Maschinen mit vier Standfüßen handelt, wird jedoch relativ schnell sehr kompliziert, wenn größer ausgedehnte Meßtische von Koordinatenmeßgeräten montiert werden müssen, bei denen sich auch Justierelemente im inneren Bereich des Meßtisches befinden. Bei den oftmals viele Meter langen und breiten Meßtischen mußten zur Befüllung der in einem zentralen Bereich liegenden Aussparungen mit dem Vergußmaterial spezielle Kanäle im Fundament vorgesehen werden, über die die Aussparungen dann befüllt wurden, wobei es hierbei oftmals vorkam, daß in den betreffenden Aussparungen entweder kein oder nur ungenügend viel Vergußmaterial ankam. Die betreffenden Anker konnten hierdurch oftmals nicht vernünftig im Fundament fixiert werden.

Es wurde deshalb bereits vorgeschlagen, durch die Meßplatte hindurch Kanäle vorzusehen, durch die das Vergußmaterial in die betreffenden Aussparungen im Fundament eingefüllt werden konnte. Das Befüllen über diese Kanäle hatte jedoch ebenfalls die unangenehme Eigenschaft, daß nicht nachkontrolliert werden konnte, ob und wie weit die Aussparungen im Fundament bereits mit Vergußmaterial befüllt waren.

Ein Justierelement, das für sehr schwere Werkzeugmaschinen vorgesehen ist, zeigt die Patentschrift GB 1 597 339. Dieses Justierelement umfasst einen Fuß und eine sich hierauf abstützende Höhenverstellung. Auf dieser Höhenverstellung liegt dann die Unterseite des Maschinenbettes der Werkzeugmaschine auf. Bei der Montage wird das Justierelement ebenfalls an der Werkzeugmaschine vormontiert und zwar über einen Gewindebolzen, dessen eines Ende im unteren Bereich des Fußes eingeschraubt ist und dessen anderes Ende durch eine Bohrung in der unteren Wand des Maschinenbettes hindurchragt und auf der anderen Seite dieser Wand mit einer Mutter gegengespannt wird. In diesem vormontierten Zustand wird das Justierelement dann in eine vorgefertigte Aussparung im Fundament eingebracht. Die Aussparung wird später dann mit Vergussmaterial aufgefüllt.

Ausgehend hiervon liegt unserer Erfindung die Aufgabe zugrunde, die bislang bekannten Justierelemente mit einem Anker der der Verankerung des Justierelements in einem Vergußmaterial im Fundament dient, und die hiermit verbundenen Verfahren zur Montage der Bauteile über diese Justierelemente auf einem Fundament derart weiterzuentwickeln, daß die Anker der genannten Justierelemente sicher im Vergußmaterial verankert werden.

Die Aufgabe wird gemäß den Merkmalen des kennzeichnenden Teils des Anspruches 1 und 5 sowie gemäß den Verfahrensmerkmalen des Anspruches 10 gelöst.

Die Besonderheit des erfindungsgemäßen Justierelementes und des hiermit verbundenen Verfahrens ist darin zu sehen, daß das gesamte Justierelement von der dem Fundament abgewandten Seite des Bauteils aus montiert werden kann.

Dies hat nachfolgend genannte besonderen Vorteile bei der Montage des Justierelements. So ist es mit dem erfindungsgemäßen Justierelement erstmals möglich, die Aussparung im Fundament unmittelbar durch diejenige Öffnung hindurch mit dem Vergußmaterial zu befüllen, in der dann das Justierelement montiert werden soll. Hierdurch kann genau überwacht werden, ob die Aussparung mit Vergußmaterial befüllt ist und wann die Aussparung vollständig mit dem Vergußmaterial befüllt ist. Darüberhinaus kann bei größeren Bauteilen auf gesonderte Kanäle verzichtet werden, um das Vergußmaterial in die Aussparungen zu befördern.

Nachdem nunmehr sichergestellt ist, daß die Aussparung befüllt ist, wird entsprechend das Justierelement montiert, wobei dann der besagte Anker in das Vergußmaterial eindringt und nunmehr lagestabil bis zum Aushärten des Vergußmaterials in das Vergußmaterial eingetaucht wird.

Die Montage erfolgt hierbei üblicherweise so, daß das Justierelement durch eine Öffnung des Bauteils hindurch montiert wird, wobei die Querabmessungen des Ankers dabei so ausgestaltet sind, daß der Anker durch die Öffnung hindurchpaßt. Die Befestigung des Justierelements kann über eine auf der vom Anker abgewandten Seite des Justierelementes befestigte Platte erfolgen, die in einem über die Öffnung hinausragenden Bereich am Bauteil über entsprechende Schrauben befestigt ist. In einer besonders vorteilhaften Ausführungsform weist das Justierelement jedoch ein Außengewinde auf, das in ein entsprechendes Innengewinde in dem besagten Bauelement eingeschraubt werden kann.

Die besagte Erfindung läßt sich insbesondere gut für großflächige Bauteile verwenden, bei denen das Justierelement in einem zentralen Bereich des Bauelements angeordnet werden muß, bei dem die Aussparungen, die mit einem Vergußmaterial befüllt werden sollen von außerhalb nicht frei zugänglich sind.

Weitere Vorteile und Weiterbildungen der Erfindung können den Figuren entnommen werden. Hierin zeigen:
- Figur 1: perspektivische Ansicht eines Koordinatenmeßgeräts bei dem der Meßtisch (1) über die erfindungsgemäßen Justierelemente auf dem Fundament befestigt ist;
- Figur 2: einen Ausschnitt eines Schnittes durch den Meßtisch (1) gemäß Figur 1, in dem ein erfindungsgemäßes Justierelement zu sehen ist.

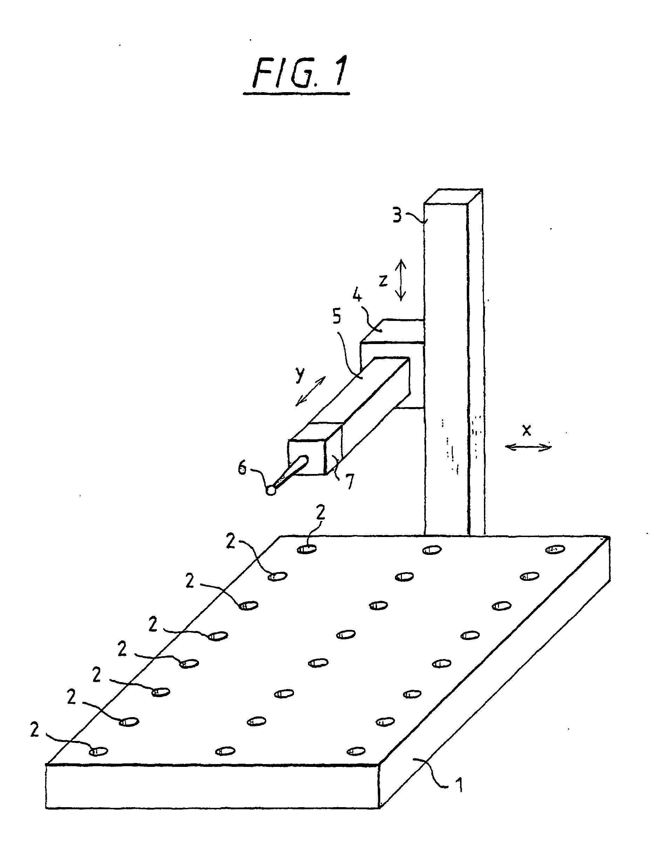

Figur 1 zeigt eine perspektivische Ansicht eines Koordinatenmeßgerätes, bei dem ein Bauteil in Form eines Meßtisches (1) mit erfindungsgemäßen Justierelementen befestigt ist. Wie hierin zu sehen, weist das Koordinatenmeßgerät hierbei einen Ständer (3) auf, der über seitlich hier nicht näher gezeigte, auf der rückwärtigen Stirnseite des Meßtisches (1) befestigte Führungen in Richtung des Pfeiles (X) beweglich geführt ist. Zusätzlich ist ein Maßstab vorgesehen, der von am Ständer (3) befestigten optischen Meßmitteln abgetastet wird. Am Ständer (3) seinerseits ist hierbei ein Kreuzschieber (4) in Richtung des Pfeiles (Z) beweglich geführt, wobei der Kreuzschieber (4) seinerseits den Meßarm (5) in Richtung des Pfeiles (Y) beweglich führt. Auch an den besagten Bauteilen (3, 5) sind entsprechende, hier nicht näher gezeigte Maßstäbe befestigt, die von entsprechenden optischen Tastköpfen im Kreuzschieber (4) zur Ermittlung der Maschinenposition abgetastet werden. Am Ende des Meßarms (5) befindet sich ein Tastkopf (7), an dem ein Taster (6) befestigt ist, der einen Kontakt mit einem zu vermessenden Werkstück dedektiert, so daß hierüber gewünschte Koordinaten des zu vermessenden Werkstücks ermittelt werden können. Der Meßtisch (1), auf dem das zu vermessende Werkstück gelagert wird, ist hierbei über in Figur 1 nicht näher dargestellte, erfindungsgemäße Justierelemente auf dem Fundament justiert, wobei sich die besagten Justierelemente in den Öffnungen (2, 23) befinden. Die Öffnungen (2, 23) bestehen in der hier nur beispielhaft gezeigten Ausführungsform jeweils aus einer Bohrung (2) sowie einer Bohrung (23), in die ein Innengewinde eingeschnitten ist. Selbstverständlich können die Öffnungen auch beliebig anders ausgeführt sein. Entscheidend ist hierbei nur, daß eine Verbindung von der Oberseite des Meßtisches mit der Unterseite des Meßtisches besteht, in der das Justierelement befestigt werden kann.

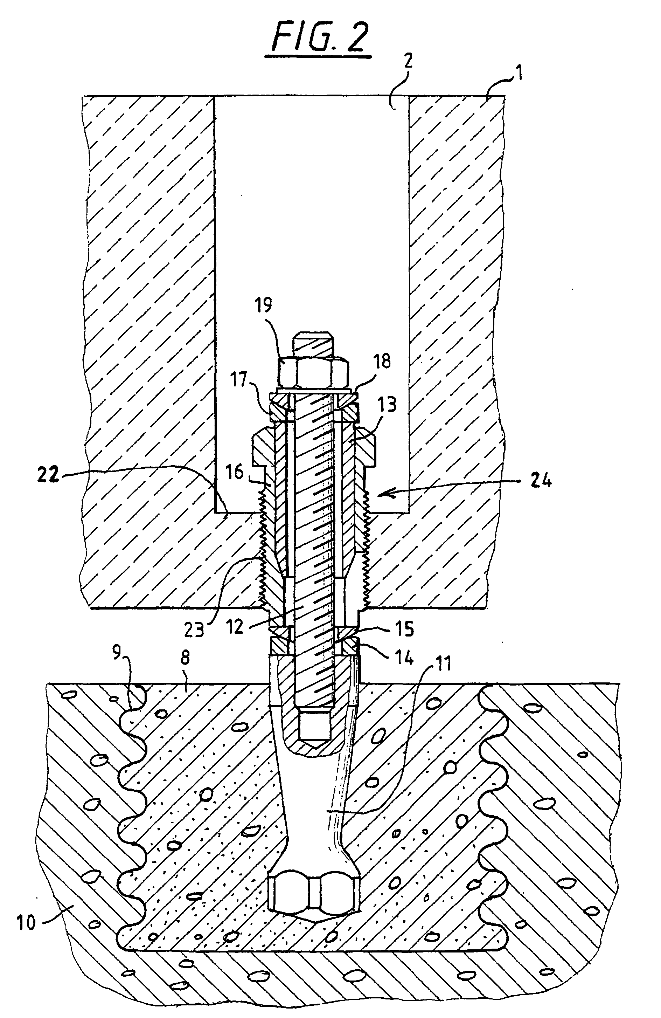

Die erfindungsgemäßen Justierelemente werden nunmehr näher anhand von Figur 2 beschrieben, in der ausschnittsweise ein Schnitt durch den Meßtisch (1) dargestellt ist. Wie hierin zu sehen ist, weist das Fundament (10) auf dem der Meßtisch (1) befestigt ist, eine Aussparung auf, in der der Anker (11) des Justierelements durch ein Vergußmaterial (8) lagestabil eingegossen ist. Die Aussparung wurde hierbei durch ein sogenanntes Wellhüllrohr (9) erzeugt, das bereits vor der Fertigstellung des Fundamentes (10) in das Fundament (10) eingebracht wurde. Bei derartigen Wellhüllrohren handelt es sich üblicherweise um aus Blech hergestellte zylindrisch ausgebildete Rohre, die auf einer Seite verschlossen sind, wobei die Oberfläche des Rohres wellenförmig ausgebildet ist, damit das Wellhüllrohr (9) gut im Fundament (10) eingegossen und befestigt werden kann. Derartige Wellhüllrohre sind in der Bauindustrie Standardelemente und können beispielsweise im Bauhandel bezogen werden.

Der Anker (11) seinerseits ist wie dargestellt ausgebildet und hat aufgrund seiner sich über die gesamte Länge laufend verändernden Querschnittsfläche die besonders vorteilhafte Eigenschaft, gut im Vergußmaterial zu verankern. Die Querschnittsfläche ist hierbei so ausgebildet, daß der Anker (11) durch den Formschluß mit dem Vergußmaterial (8) sowohl auf Zug wie auch auf Druck belastet werden kann. Das Ende des Ankers (11) ist hierbei als Sechskant ausgebildet, so daß sich der Anker (11) nach dem Aushärten des Vergußmaterials (8) auch nicht mehr verdreht. Auf der Seite des Meßtisches (1) weist der Anker (11) eine Bohrung mit einem entsprechenden Gewinde auf, in das eine Gewindestange (12) eingeschraubt ist und mit dem Anker (11) verklebt ist. Am anderen Ende der Gewindestange ist eine Mutter (19) aufgesetzt, die der Befestigung der noch zu beschreibenden Höhenverstellung (24) an der Gewindestange (12) dient. Die Höhenverstellung (24) ist damit über die Gewindestange (12) am Anker befestigt.

Die Höhenverstellung (24) weist neben der besagten Mutter (19) eine Kegelpfanne (14), eine Kugelscheibe (15), eine Justierschraube (16), eine Spannhülse (13) sowie eine Kegelpfanne (17) und eine Kugelscheibe (18) auf. Die Höhenverstellung erfolgt hierbei wie folgt. Die Justierschraube (16) ist hierbei mit einem Außengewinde versehen, das in ein entsprechendes Innengewinde der Bohrung (23) eingeschraubt ist. Soll die Höhe des Meßtisches (1) gegenüber dem Fundament (10) verändert werden, so muß die Justierschraube (16) entsprechend gedreht werden, so daß sich über das besagte Gewinde der Meßtisch (1) gegenüber der Justierschraube (16) hebt und senkt. Um hierbei mögliche Verdrehungen des Meßtisches (1) gegenüber dem Anker (11) auszugleichen, ist die Justierschraube (16) über die besagte Kugelscheibe (15) auf der Kegelpfanne (14) gelagert. Nachdem die Höhe des Meßtisches an dem betreffenden Punkt richtig eingestellt ist, wird in einem nächsten Schritt die Justierschraube (16) fixiert, damit sie sich nicht mehr verstellen kann. Die Fixierung erfolgt hierbei mittels der Spannhülse (13), die an ihrem unteren Ende konisch ausgeformt ist. Die Justierschraube (16) ist in dem aufnehmenden Bereich der Spannhülse (13) ebenfalls konisch ausgeformt und im unteren Bereich geschlitzt. Wird nun über die Mutter (19), die Kugelscheibe (18), die Kegelpfanne (17), die Spannhülse (13) auf die Justierschraube (16) zubewegt, so spreizt sich das geschlitzte Ende der Justierschraube (16) auseinander, so daß sich hierdurch die Reibung zwischen der Justierschraube (16) und dem entsprechenden Innengewinde des Meßtisches (1) soweit erhöht, daß die Justierschraube (16) nicht mehr verdreht werden kann. Die Höhenverstellung weist damit eine Spannvorrichtung auf, über die die Justierschraube lagestabil in das Innengewinde des Meßtisches eingespreizt werden kann.

Die Kegelpfanne (17) und die Kugelscheibe (18) sind hierbei vollkommen analog zu den Bauteilen (14, 15) dazu vorgesehen, um mögliche Lageabweichungen der Gewindestange (12) gegenüber der Spannhülse (13) auszugleichen.

Eine ähnliche Einstelleinrichtung ist bereits in der Deutschen Offenlegungsschrift 41 15 014 im Zusammenhang mit den darin gezeigten Figuren 9 bis 12 beschrieben worden. Mit der hierin gezeigten Einstellvorrichtung wird bei einem Koordinatenmeßgerät der Abstand einer Führung zum Meßtisch eingestellt.

Im folgenden soll nunmehr das Verfahren erläutert werden, mit dem das erfindungsgemäße Justierelement montiert wird. Wie bereits erläutert wird hierzu zunächst der Meßtisch (1) derart auf dem Fundament (10) positioniert, daß die mit den Gewinden versehenen Bohrungen (23) sich über den entsprechenden durch die Wellhüllrohre (9) vorgegebenen Aussparungen im Fundament befinden. In einem nächsten Schritt wird durch ein erstes der Löcher, das zur Verankerung des Ankers (11) notwendige Vergußmaterial (8) durch die Öffnung (2,23) hindurch in die Aussparung eingefüllt. In einem nächsten Schritt wird von der Oberseite aus das Justierelement in der betreffenden Öffnung (2,23) des Meßtisches (1) montiert und zwar derart, daß hierbei der Anker (11) des Justierelementes in das Vergußmaterial (8) eintaucht. Die Montage des Justierelementes erfolgt hierbei derart, daß der Anker (11) zunächst durch die Bohrung (23) hindurchgeführt wird und danach die Justierschraube (16) in das entsprechende Innengewinde der Bohrung (23) des Meßtisches (1) soweit eingeschraubt wird, bis der Anker (11) weit genug in das Vergußmaterial eingetaucht ist. Nachdem das Vergußmaterial (8) dann ausgehärtet ist, kann die Höhe des Meßtisches durch Verdrehen der Justierschraube (16) entsprechend eingestellt werden, wobei aufgrund der Konstruktion des Justierelementes das Justierelement sowohl auf Druck, wie auch auf Zug belastet werden kann, so daß der Meßtisch (1) also sowohl angehoben werden kann, wie auch in Richtung des Fundamentes gezogen werden kann.

Das Vergußmaterial (8) ist hierbei besonders vorteilhafterweise ein zusätzlich quellender Zement, der die besondere Eigenschaft hat, daß er während des Aushärtevorgangs sein Volumen vergrößert. Hierdurch kann eine sichere Verankerung des Ankers (11) bezweckt werden.

Zur Verarbeitung des quellenden Zementes ist folgendes anzumerken. So ist es natürlich auch möglich die Aussparungen zum Vergießen der Anker nachträglich in das Fundament einzuarbeiten, sodaß in diesem Falle die Aussparungen gegenüber dem Fundament nicht mehr durch ein Wellhüllrohr getrennt sind. Da für diesen Fall das Vergußmaterial direkt mit dem Fundament in Berührung kommt und das Fundament üblicherweise aus Beton besteht, besteht die Gefahr, daß das Wasser aus dem Vergußmaterial durch das Fundament abgezogen wird. Hierdurch könnte das Vergußmaterial zu schnell austrocknen und damit die quellenden Eigenschaften des Vergußmaterial nicht zum tragen kommen. Um dies zu vermeiden, sollten in diesem Falle die Aussparungen im Fundament vor der Befüllung mit dem Vergußmaterial mit Wasser angefeuchtet werden.

Es versteht sich, daß die Erfindung nicht auf die in den Figuren 1 und 2 gezeigten Ausführungsformen beschränkt ist, sondern daß vielmehr selbstverständlich aurh sämtliche Ausführungrsformen miterfaßt werden sollen, die durch die Ansprüche definiert sind. So könnte beispielsweise das Justierelement auch eine Platte aufweisen, die über vier Schrauben an der Fläche (22) des Meßtisches (1) befestigt ist. Das Justierelement könnte dann gegenüber dieser Platte analog über ein Gewinde höhenverstellbar ausgeführt sein. Selbstverständlich muß auch der Anker (11) nicht die gezeigte Form aufweisen. Entscheidend ist hierbei lediglich, daß die Form des Ankers derart ausgestaltet ist, daß der Anker in dem besagten Vergußmaterial (8) sowohl auf Zug, wie auch auf Druck belastet werden kann, was durch entsprechenden Formschluß zwischen dem Vergußmaterial (8) und dem Anker (11) erreicht wird.

## Patentansprüche

1. Justierelement zur Montage eines Bauteils auf einem Fundament (10) umfassend eine Höhenverstellung (24), die der Verstellung der Höhe des Bauteils gegenüber dem Fundament (10) dient, sowie einen Anker (11), der der Verankerung des Justierelements in einem Vergußmaterial (8) im Fundament (10) dient, **dadurch gekennzeichnet, daß** das gesamte Justierelement von der dem Fundament (10) abgewandten Seite des Bauteils aus montierbar ist, wobei dazu, das Justierelement zur Montage in einer Öffnung (2,23) im Bauteil vorgesehen ist und die Querabmessungen des Ankers (11) so ausgestaltet sind, daß der Anker (11) durch die Öffnung hindurchpaßt.

2. Justierelement nach Anspruch 1, **dadurch gekennzeichnet, daß** die Höhenverstellung (24) des Bauteils ein sich in Längsrichtung erstreckendes Außengewinde aufweist.

3. Justierelement nach Anspruch 1, **dadurch gekennzeichnet, daß** der Anker (11) über seine gesamte Länge eine sich verändernde Querschnittsfläche aufweist.

4. Justierelement nach Anspruch 1, **dadurch gekennzeichnet, daß** die Höhenverstellung (24) über eine Gewindestange (12) mit dem Anker (11) verbunden ist.

5. Koordinatenmeßgerät mit einem Meßtisch (1), der über ein Justierelement auf einem Fundament (10) montiert ist, wobei das Justierelement eine Höhenverstellung (24) aufweist, die der Verstellung der Höhe des Meßtisches (1) gegenüber dem Fundament (10) dient, sowie einen Anker (11) aufweist, der in einem Vergußmaterial (8) im Fundament (10) verankert ist, **dadurch gekennzeichnet, daß** das Justierelement von der dem Fundament (10) abgewandten Seite des Meßtisches (1) aus montierbar ist, wobei dazu das Justierelement in einer Öffnung des Bauteils montiert ist und die Querabmessungen des Ankers (11) so ausgestaltet sind, daß der Anker (11) durch die Öffnung hindurchpaßt.

6. Koordinatenmeßgerät nach Anspruch 5, **dadurch gekennzeichnet, daß** die Öffnung eine Bohrung (23) mit einem Innengewinde aufweist und die Höhenverstellung eine mit dem Innengewinde der Bohrung zusammenwirkende Justierschraube mit einem Außengewinde aufweist.

7. Koordinatenmeßgerät nach Anspruch 5, **dadurch gekennzeichnet, daß** der Anker (11) über seine gesamte Länge eine sich derart verändernde Querschnittsfläche aufweist, so daß der Anker (11) durch den hierdurch entstehenden Formschluß mit dem Vergußmaterial (8) sowohl auf Zug, wie auch auf Druck belastbar ist.

8. Koordinatenmeßgerät nach den Anspruch 6, **dadurch gekennzeichnet, daß** die Höhenverstellung (24) eine Spannvorrichtung aufweist, über die die Justierschraube lagestabil in das Innengewinde des Meßtisches eingespreizt werden kann.

9. Koordinatenmeßgerät nach Ansprüche 5, **dadurch gekennzeichnet, daß** das Vergußmaterial ein quellender Zement ist.

10. Verfahren zur Befestigung eines Bauteiles auf einem Fundament (10), wobei das Bauteil eine Vielzahl von Öffnungen (2,23) aufweist, in denen Justierelemente montiert werden, über die das Bauteil dann höhenverstellbar auf einem Fundament gelagert wird und wobei die Justierelemente jeweils über ein Vergußmaterial (8) in einer jeweils zugeordneten Aussparung des Fundaments (10) fixiert werden, beinhaltend folgende Verfahrensschritte:
- Positionieren des Bauteils auf dem Fundament (10) derart, daß sich die Öffnungen über den entsprechenden Aussparungen im Fundament (10) befinden;
- Eingießen des Vergußmaterials (8) durch die Öffnungen (2,23) hindurch in die Aussparungen;
- Montieren der Justierelemente in den Öffnungen (2,23) von der dem Fundament abgewandten Seite des Bauteiles aus, derart, daß die Justierelemente hierbei in das Vergußmaterial (8) eintauchen.

11. Verfahren nach Anspruch 10, **dadurch gekennzeichnet, daß** nach dem Aushärten des Vergußmaterials (8) die Höhe des Meßtisches (1) gegenüber dem Fundament (10) verstellt wird.

12. Verfahren nach den Ansprüchen 10 oder 11, **dadurch gekennzeichnet, daß** die Höhenverstellung derart fixiert wird, daß ein erneutes Verstellen der Höhe nur nach dem Lösen der Fixierung wieder erfolgen kann.

## Claims

1. Adjusting element for mounting a component on a foundation (10), comprising a height adjusting means (24) which is used to adjust the height of the component with respect to the foundation (10), and an anchor (11) which is used to anchor the adjusting element in a grouting material (8) in the foundation (10), **characterized in that** the entire adjusting element can be mounted from the side of the component that faces away from the foundation (10), the adjusting element being provided for the purpose of mounting in an opening (2, 23) in the component, and the transverse dimensions of the anchor (11) being configured such that the anchor (11) fits through the opening.

2. Adjusting element according to Claim 1, **characterized in that** the height adjusting means (24) of the component has an external thread that extends in the longitudinal direction.

3. Adjusting element according to Claim 1, **characterized in that** the anchor (11) has a cross-sectional area which changes over its entire length.

4. Adjusting element according to Claim 1, **characterized in that** the height adjusting means (24) is connected to the anchor (11) via a threaded rod (12).

5. Coordinate measuring instrument having a measuring table (1) which is mounted on a foundation (10) via an adjusting element, the adjusting element having a height adjusting means (24) which is used to adjust the height of the measuring table (1) with respect to the foundation (10), and also having an anchor (11) which is anchored in a grouting material (8) in the foundation (10), **characterized in that** the adjusting element can be mounted from the side of the measuring table (1) that faces away from the foundation (10), the adjusting element being mounted in an opening in the component, and the transverse dimensions of the anchor (11) being configured such that the anchor (11) fits through the opening.

6. Coordinate measuring instrument according to Claim 5, **characterized in that** the opening has a bore (23) with an internal thread, and the height adjusting means has an adjusting screw with an external thread that interacts with the internal thread of the bore.

7. Coordinate measuring instrument according to Claim 5, **characterized in that** the anchor (11) has a cross-sectional area which changes over its entire length in such a way that the anchor (11) can be loaded both in tension and in compression by means of the form fit produced as a result with the grouting material (8).

8. Coordinate measuring instrument according to Claim 6, **characterized in that** the height adjusting means (24) has a clamping apparatus via which the adjusting screw can be expanded in a positionally stable manner into the internal thread in the measuring table.

9. Coordinate measuring instrument according to Claim 5, **characterized in that** the grouting material is an expanding cement.

10. Method of fixing a component to a foundation (10), the component having a large number of openings (2, 23) in which adjusting elements can be mounted, via which the component is then mounted on a foundation such that its height can be adjusted, and the adjusting elements in each case being fixed via a grouting material (8) in a respectively associated recess in the foundation (10), including the following method steps:
- positioning the component on the foundation (10) in such a way that the openings are located above the corresponding recesses in the foundation (10);
- pouring the grouting material (8) through the openings (2, 23) into the recesses;
- mounting the adjusting elements in the openings (2, 23) from the side of the component that faces away from the foundation, in such a way that the adjusting elements in this case dip into the grouting material (8).

11. Method according to claim 10, **characterized in that**, after the grouting material (8) has set, the height of the measuring table (1) with respect to the foundation (10) is adjusted.

12. Method according to Claim 10 or 11, **characterized in that** the height adjusting means is fixed in such a way that renewed adjustment of the height can be carried out only after the fixing has been released again.

## Revendications

1. Elément de réglage pour le montage d'un composant sur une fondation (10) comprenant un réglage en hauteur (24) servant au réglage de la hauteur du composant par rapport à la fondation (10), ainsi qu'un pied d'ancrage (11) servant à l'ancrage de l'élément de réglage dans un matériau de scellement (8) dans la fondation (10), **caractérisé en ce que** l'ensemble de l'élément de réglage peut être monté depuis le côté du composant opposé à la fondation (10), le montage de l'élément de réglage étant prévu dans ce but dans une ouverture (2, 23) du composant, les dimensions transversales du pied d'ancrage (11) étant réalisées de sorte que le pied d'ancrage (11) puisse passer par l'ouverture.

2. Elément de réglage selon la revendication 1, **caractérisé en ce que** le réglage en hauteur (24) du composant présente un filetage extérieur s'étendant dans la direction longitudinale.

3. Elément de réglage selon la revendication 1, **caractérisé en ce que** le pied d'ancrage (11) présente une surface de section transversale variant sur toute sa longueur.

4. Elément de réglage selon la revendication 1, **caractérisé en ce que** le réglage en hauteur (24) est relié au pied d'ancrage (11) par le biais d'une tige filetée (12).

5. Appareil de mesure de coordonnées avec une table de mesure (1) montée sur une fondation (10) par le biais d'un élément de réglage, l'élément de réglage présentant un réglage en hauteur (24) servant au réglage de la hauteur de la table de mesure (1) par rapport à la fondation (10), ainsi qu'un pied d'ancrage (11) ancré dans un matériau de scellement (8) dans la fondation (10), **caractérisé en ce que** l'élément de réglage peut être monté depuis le côté de la table de mesure (1) opposé à la fondation (10), l'élément de réglage étant monté dans ce but dans une ouverture du composant et les dimensions transversales du pied d'ancrage (11) étant réalisées de sorte que le pied d'ancrage (11) puisse passer par l'ouverture.

6. Appareil de mesure de coordonnées selon la revendication 5, **caractérisé en ce que** l'ouverture présente un perçage (23) muni d'un taraudage et **en ce que** le réglage en hauteur présente une vis de réglage munie d'un filetage extérieur coopérant avec le taraudage du perçage.

7. Appareil de mesure de coordonnées selon la revendication 5, **caractérisé en ce que** le pied d'ancrage (11) présente une surface de section transversale variant sur toute sa longueur de sorte que le pied d'ancrage (11), par l'engagement positif ainsi réalisé avec le matériau de scellement (8), puisse être sollicité en traction comme en compression.

8. Appareil de mesure de coordonnées selon la revendication 6, **caractérisé en ce que** le réglage en hauteur (24) présente un dispositif de serrage grâce auquel la vis de réglage peut être écartée dans le taraudage de la table de mesure pour assurer son blocage en position.

9. Appareil de mesure de coordonnées selon la revendication 5, **caractérisé en ce que** le matériau de scellement est un ciment expansif.

10. Procédé pour la fixation d'un composant sur une fondation (10), le composant présentant une pluralité d'ouvertures (2, 23) dans lesquelles se montent des éléments de réglage à l'aide desquels le composant est alors disposé de manière réglable en hauteur sur une fondation, et chaque élément de réglage étant fixé par le biais d'un matériau de scellement (8) dans un évidement de la fondation (10) qui lui est attribué, comprenant les étapes de procédé suivantes:
- positionnement du composant sur la fondation (10) de sorte que les ouvertures se situent au-dessus des évidements correspondants dans la fondation (10) ;
- coulée du matériau de scellement (8) dans les évidements, à travers les ouvertures (2, 23);
- montage des éléments de réglage dans les ouvertures (2, 23), depuis le côté du composant opposé à la fondation, de sorte que les éléments de réglage plongent dans le matériau de scellement (8).

11. Procédé selon la revendication 10, **caractérisé en ce que**, après le durcissement du matériau de scellement (8), il est procédé au réglage de la hauteur de la table de mesure (1) par rapport à la fondation (10).

12. Procédé selon la revendication 10 ou 11, **caractérisé en ce que** le réglage en hauteur est bloqué de telle sorte qu'un nouveau réglage de la hauteur ne peut être effectué qu'après desserrage du blocage.
